# EUROPÄISCHE PATENTSCHRIFT

(11) **EP 1 453 720 B1**
(45) Veröffentlichungstag und Bekanntmachung des Hinweises auf die Patenterteilung: **16.03.2005**
(21) Anmeldenummer: 02805303.1
(22) Anmeldetag: 04.12.2002
(51) Int. Cl.: B62D 5/12

(54) **ZWEIKREISIGES STEER-BY-WIRE LENKSYSTEM MIT GEMEINSAMEN SCHLITTEN**
DUAL-CIRCUIT STEER-BY-WIRE STEERING SYSTEM COMPRISING A COMMON CRADLE
DISPOSITIF D'ORIENTATION PAR CABLES A DEUX CIRCUITS A COULISSEAUX COMMUNS

(30) Priorität: 11.12.2001 DE 10160764
(43) Veröffentlichungstag der Anmeldung: 08.09.2004
(73) Patentinhaber: ThyssenKrupp Presta SteerTec GmbH, 40476 Düsseldorf (DE)
(72) Erfinder: SIKORA, Karsten, 41844 Wegberg (DE); HORWATH, Jochen, 72669 Unterensingen (DE)
(74) Vertreter: Gerber, Wolfram
(86) Internationale Anmeldenummer: PCT/EP2002/013726
(87) Internationale Veröffentlichungsnummer: WO 2003/053765

(56) Entgegenhaltungen:
- EP-A- 1 046 570
- CH-A- 412 625
- GB-A- 2 275 662
- PATENT ABSTRACTS OF JAPAN vol. 008, no. 112 (M-298), 25. Mai 1984 (1984-05-25) -& JP 59 020773 A (NISSAN JIDOSHA KK), 2. Februar 1984 (1984-02-02)

## Beschreibung

Die vorliegende Erfindung betrifft eine Steer-By-Wire-Lenkung, mit einem auf die lenkbaren Räder wirkenden hydraulisch arbeitenden Stellaggregat.

Die Stellaggregate gattungsgemäßer zweikreisiger Steerby-wire-Lenksysteme bestehen idR aus zwei Stellzylindern, die für sich einzeln gelagert sind und die flexible Verbindungsleitungen für die Zuführung des fluiden Mediums benötigen. Aufgrund ihres Aufbaus sind die Stellzylinder idR sperrig und sind aufgrund der flexiblen Zuführleitungen störanfällig.

Es sind zudem aus der GB 2 275 662und JP 59-20773 Lenksysteme bekannt, bei denen doppelt-wirkende Stellzylinder die gelenkten Fahrzeugräder verstellen. Nachteilig bei diesen Lenksystemen ist, dass jeweils getrennte Zuführleitungen ausgehend von einem Ventilblock zu den beiden Arbeitsräumen eines doppeltwirkenden Zylinders geführt werden. Dabei wird eine Zuführleitung stets außen entlang des Zylinders entlanggeführt, wodurch diese geqen äußere Einwirkungen ungeschützt ist, sofern nicht besondere Maßnahmen zum Schutz der Leitung getroffen werden. Zudem baut das Lenksystem durch die außenliegende Zuführleitung, unnötig groß.

Aufgabe der vorliegenden Erfindung ist es, eine Steer-By-Wire-Lenkung bereitzustellen, die in ihrem Aufbau kompakt und möglichst störunanfällig ist.

Diese Aufgabe wird erfindungsgemäß mit einer Steer-By-Wire-Lenkung gemäß den Merkmalen des Anspruchs 1 gelöst. Weitere vorteilhafte Ausführungsformen der erfindungsgemäßen Steer-By-Wire-Lenkung ergeben sich durch die Merkmale der Unteransprüche.

Die erfindungsgemäße Steer-By-Wire-Lenkung zeichnet sich dadurch aus, daß durch feststehende Führungsstangen, welche insbesondere direkt an der Karosserie oder Ventilblöcken befestigt sind, ein große Biegesteifigkeit des Lenksystems erzielt wird, da die verwendeten Führungsstangen einen im Verhältnis zur Kolbenstange bei herkömmlichen Stellzylindern größeren Durchmesser aufweisen. Auf den Führungsstangen des erfindungsgemäßen Steer-By-Wire-Lenksystems ist ein Schlitten verschieblich gelagert, wobei der Schlitten zusammen mit den Führungsstangen Arbeitsräume eines Kolben-Zylinder-Systems bildet. Es ist im Sinne der Erfindung, lediglich eine Führungsstange oder aber auch mehrere Führungsstangen bei der erfindungsgemäßen Lenkung zu verwenden. Es ist ebenso im Sinne der Erfindung, daß alle Führungsstangen Kolbenzylindersysteme mit dem Schlitten oder den Schlitten bilden. Es ist jedoch auch möglich, daß mindestens eine Führungsstange vorhanden ist, die lediglich die Funktion der Führung des Schlittens erfüllt, nicht jedoch ein Kolbenzylindersystem bildet.

Die Anordnung der Kolbenführungsstangen am Kraftfahrzeug ist prinzipiell beliebig. Die Führungsstangen sind vorteilhaft quer zur Fahrtrichtung und parallel zur Fahrbahn angeordnet. Es ist jedoch durchaus auch möglich, die Führungsstangen in einer anderen Ausrichtung am Fahrzeug anzuordnen.

Sofern mehr als eine Führungsstange vorhanden ist, sind diese vorzugsweise parallel zueinander auf einer Höhe angeordnet. Es ist jedoch auch möglich, daß die Führungsstangen übereinander und parallel zu einander angeordnet sind. Der Kraftangriffspunkt der Spurstangen an dem oder den Schlitten, welche(r) auf den Führungsstangen verschieblich gelagert ist/sind, ist in Abhängigkeit von den gegebenen Einbauräumen zu wählen. Vorteilhaft sind die Kraftangriffspunkte der Spurstangen beider gelenkten Räder so zu wählen, daß sie mittig zu zwei parallelen Führungsstangen liegen, so daß keine Drehmomente an den Führungsstangen angreifen. Durch diesen Mittenabgriff ist es insbesondere möglich, lange Führungsstangen vorzusehen, was vorteilhaft zu geringen Lenkfehlern beim Ein- und Ausfedern führt. Es können auch eine oder mehrere lange Führungsstangen verwendet werden, wobei zusätzlich eine mittlere Spurstange die beiden Kraftangriffspunkte der beiden Spurstangen miteinander verbindet. Diese mittlere Spurstange ist parallel zu der oder den Führungsstangen anzuordnen. Vorteilhaft ist sie parallel zu der oder den Führungsstangen parallel verschieblich an der Karosserie gelagert. Wodurch vorteilhaft keine Biegemomente an den Spurstangen angreifen.

Dadurch, daß die Anbindung am Fahrzeugrahmen weit außen aufgrund der langen Führungsstangen erfolgt, ergibt sich eine steifere Anbindung des Führungsstangen-Schlittensystems. Vorteilhaft ist das erfindungsgemäße Steer-By-Wire-Lenksystem modular aufgebaut. So ist es möglich, die Führungsstangen zwischen zwei Ventilblöcken anzuordnen. Je nach Fahrzeugtyp können die Ventilblöcke bzw. das Führungsstangen-Schlittensystem entsprechend gewählt werden, wobei Standardmodule für verschiedene Fahrzeugtypen verwendbar sind.

Aufgrund der Tatsache, daß die Führungsstangen selbst die Leitungsführung für das fluide Medium bilden, sind vorteilhaft keine zusätzlichen Verbindungsschläuche wie bei herkömmlichen Lenksystemen notwendig, so daß sich vorteilhaft ein geringeres Leckagerisiko ergibt.

Sofern zwei Führungsstangen Verwendung finden, welche jede für sich Zuführungsleitungen zu Arbeitsräumen von Kolbenzylindersystemen bilden, ist jede Führungsstange für sich Bestandteil eines Lenkkreises, wobei die beiden Lenkkreise rein zweikreisig oder aber auch teilweise einkreisig, das heißt zum Beispiel mit gemeinsamer Pumpe ausgeführt sein können. Prinzipiell ist die erfindungsgemäße Steer-By-Wire-Lenkung entsprechend aller bekannter Lenkkreisbeschaltung beschaltbar. Die beiden Lenkkreise können zum Beispiel Ventile mit geschlossener oder mit geöffneter Mitte aufweisen. Es ist jedoch auch möglich, daß ein Lenkkreis vom Kraftniveau derart dimensioniert ist, daß er für sich allein die Lenkkräfte beim normalen Fahrbetrieb aufbringen kann. Der zweite Lenkkreis dient dann als Reserve, welcher entweder beim Ausfall des ersten Lenkkreises zugeschaltet wird oder aber im Bedarfsfall, zum Beispiel im Parkier- bzw. Rangierbetrieb, bei dem hohe Lenkkräfte erforderlich sind, zugeschaltet wird.

Wie bereits ausgeführt, können bei einer derartigen Verwendung des vorbeschriebenen Steer-By-Wire-Lenksystems die eingesetzten Steuerventile für die Lenkkreise Ventile mit geöffneter oder mit geschlossener Mitte ("open center" bzw. "closed center") sein. Die Verwendung von Ventilen mit geschlossener Mitte mit gleichzeitiger Verwendung eines Druckspeichers hat den Vorteil, daß die Pumpe zum Aufbau eines Arbeitsdrucks des fluiden Mediums nicht fortlaufend in Betrieb sein muß, wodurch vorteilhaft Energie und damit Kraftstoff eingespart wird.

Wie ebenfalls bereits ausgeführt, kann der Schlitten bei der erfindungsgemäßen Steer-By-Wire-Lenkung sowohl als Tandem- als auch als Einzelzylinder ausgestaltet sein. Beim Tandem-Zylinder sind die Arbeitsräume der Kolbenzylindersysteme jedes Lenkkreises in axialer Richtung nebeneinander angeordnet und durch Dichtungen voneinander getrennt. Bei der Verwendung nur einer Führungsstange und eines Schlittens bzw. Einzelzylinders sind die Arbeitsräume beider Lenkkreise in axialer Richtung nebeneinander bzw. hintereinander angeordnet. Hierdurch ergibt sich ein relativ kleines Bauvolumen, wodurch jedoch der Schlitten bzw. der Stellzylinder, welcher die Führungsstange von außen umgreift, länger als die Stellzylinder des Tandemsystems ist.

Nachfolgend werden Ausführungsbeispiele der erfindungsgemäßen Steer-By-Wire-Lenkung anhand von Figuren näher erläutert.

Es zeigen:
- Fig. 1:: eine schematische Darstellung einer erfindungsgemäßen Steer-By-Wire-Lenkung;
- Fig. 2:: ein zweikreisiges Steer-By-Wire-Lenkungs-System mit mittig angreifenden Spurstangen;
- Fig. 3.: eine Schnittdarstellung durch eine Steer-By-Wire-Lenkung gemäß Fig. 2;
- Fig. 4:: eine perspektivische Darstellung einer erfindungsgemäßen Steer-By-Wire-Lenkung;
- Fig. 5:: eine Darstellung der Zuführleitungen des zweikreisigen Steer-By-Wire-Lenksystems gemäß der Fig. 1 bis 4;
- Fig. 6:: eine Detaildarstellung eines erfindungsgemäßen Steer-By-Wire-Lenksystems mit nur einer Führungstange;
- Fig. 7:: eine Querschnittsdarstellung durch das Kolbenzylindersystem der Steer-By-Wire-Lenkung gemäß Fig. 6.

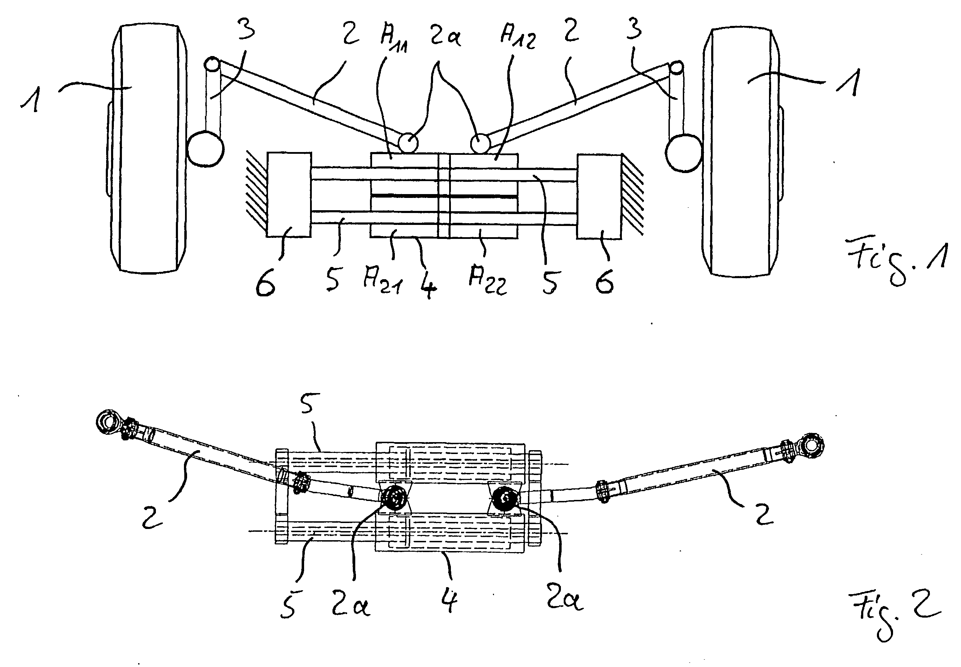

Die Fig. 1 zeigt eine schematische Darstellung einer ersten Ausführungsform des erfindungsgemäßen Steer-By-Wire-Lenksystems, wobei lenkbare Räder 1 über Lenkhebel 3 und Spurstangen 2 von einem Schlitten 4, welcher beweglich bzw. verschieblich auf zwei Führungsstangen 5 gelagert ist, verstellt werden. Der Schlitten 4 bildet zusammen mit den Führungsstangen 5 vier Arbeitsräume A₁₁, A₁₂, A₂₁ und A₂₂. Die Führungsstangen 5 sind zwischen zwei Ventilblöcken 6 starr an der Karosserie des Fahrzeugs gelagert. Der Schlitten 4 und die Führungsstangen 5 bilden ein besonderes Kolben-Zylinder-System, bei dem die Kinematik umgekehrt ist, da hier der Kolben bzw. die Führungsstange(n) feststeht und sich der Zylinder bzw. Schlitten bewegt.

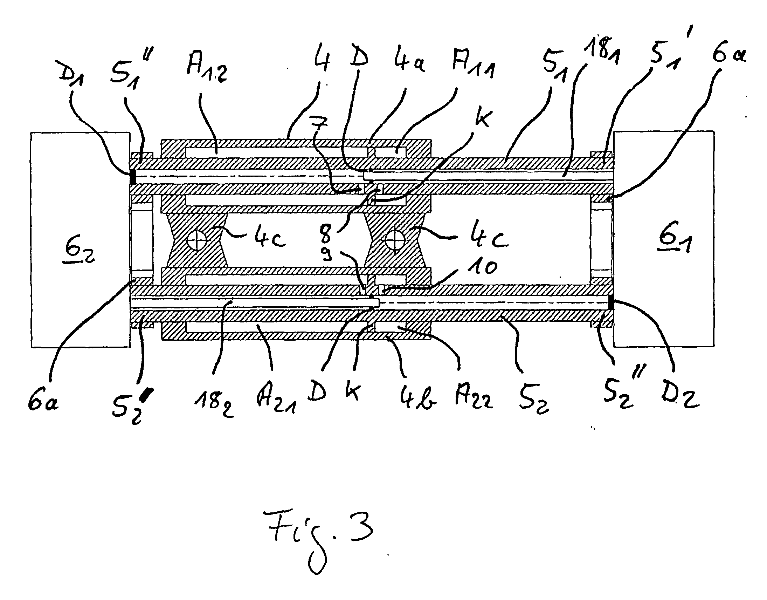

Die Fig. 2 zeigt eine weitere Ausführungsform der erfindungsgemäßen Steer-By-Wire-Lenkung, bei der die Kraftangriffspunkte 2a der Spurstangen 2 mittig zwischen den beiden Führungsstangen 5 am Schlitten 4 angeordnet sind. Durch die mittige Anordnung der Kraftangriffspunkte 2a zu den Führungsstangen 5 ergibt sich eine momentenarme Belastung des Schlittens 4, wodurch die Ausführung nicht so massiv gestaltet sein muß.

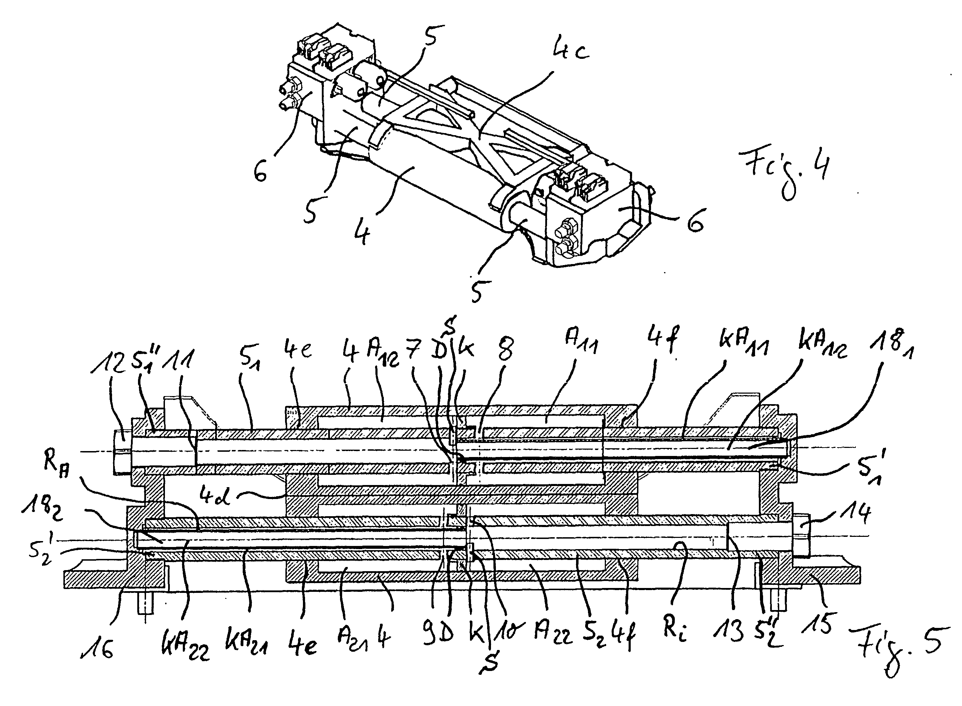

Die Fig. 3 zeigt eine Querschnittsdarstellung des Kolben-Zylinder-Systems gemäß der Ausführungsform der Fig. 2. Die Führungsstangen 5₁ und 5₂ sind zwischen den Ventilblöcken 6₁ und 6₂ gelagert. Der Schlitten 4 besteht aus zwei Zylindern 4a und 4b, welche über Zwischenteile 4c miteinander starr verbunden sind. Die Führungsstangen 5₁ und 5₂ sind zwischen den Ventilblöcken 6₁ und 6₂ angeordnet. Die freien Enden 5'₁ und 5"₁, 5'₂ und 5''₂ sind mittels Befestigungselementen 6a an den Ventilblöcken 6₁ und 6₂ befestigt, insbesondere mit ihren Enden in die Ventilblöcke verschraubt. Die Führungsstangen 5₁ und 5₂ sind als Rohre ausgebildet, welche vorteilhaft einen kreisförmigen Querschnitt für Außen- und Innendurchmesser aufweisen. Es ist jedoch auch möglich eine beliebige Querschnittsform zu wählen. Allerdings ist hierbei zu beachten, daß eine mögliche einfache und dauerhaft Dichtung zwischen den Führungsstangen und dem Schlitten gewährleistet sein muß. Durch die Wahl eines kreisförmigen Querschnitts ist es möglich, daß der Hohlraum jedes Zylinders 4a, 4b zum Beispiel mittels einer Bohrung herstellbar ist oder aber durch ein einfaches Rohr gebildet ist. Die Führungsstangen 5₁ und 5₂ weisen ebenfalls durchgehende Hohlräume auf. Die Hohlräume können mittels Bohrungen realisiert werden. Es ist jedoch ebenso möglich als Führungsstange ein Rohr zu verwenden.

In den Hohlraum jeder Führungsstange 5₁, 5₂ greift jeweils von einer Stirnseite aus ein innenliegendes Rohr 18₁, 18₂. Das Ende 5"₁ und 5"₂ jeder Führungsstange 5₁, 5₂ ist jeweils mittels einer Dichtung D₁ bzw. D₂ verschlossen, so daß das durch das Innenrohr 18₁ bzw. 18₂ über die Führungsstange 5₁ bzw. 5₂ in den jeweiligen Arbeitsraum A₁₂ bzw. A₂₂ strömende Medium nicht aus der Führungsstange 5₁ bzw. 5₂ bzw. dem Kolben-Zylinder-System heraustreten kann. Die innenliegenden Rohre 18₁ bzw. 18₂ sind jeweils von einer Dichtung D an ihrem im Hohlraum befindlichem Ende umgriffen, welche das innenliegende Rohr 18₁ bzw. 18₂ gegenüber der Innenwandung der Führungsstange 5₁ bzw. 5₂ abdichtet und somit den Innenraum der Führungstange 5₁ bzw. 5₂ in zwei Teilbereiche unterteilt. Die Führungsstange verfügt über fensterartige Öffnungen 7, 8, 9 und 10, die die Zuführ- bzw. Abführleitungen mit den Arbeitsräumen A₁₁, A₁₂, A₂₁ und A₂₂ verbindet.

Sofern der Schlitten 4 von links nach rechts bewegt werden soll, kann entweder in dem Arbeitsraum A₁₁ oder in dem Arbeitsraum A₂₂ ein Druck aufgebaut werden. So ist es im Sinne der Erfindung, beide Zylinder gleichzeitig mit einem Fluiddruck zu beaufschlagen. Ebenso ist es im Sinne der Erfindung, und dies gilt ebenfalls für alle dargestellten Ausführungsformen, daß der Zylinder 4a zusammen mit der Führungsstange 5₁ Bestandteil eines ersten Lenkkreises ist und der Zylinder 4b zusammen mit der Führungsstange 5₂ Bestandteil eines zweiten Lenkkreises ist. Wie bereits erläutert können beide Lenkkreise parallel betrieben werden. Es ist jedoch auch möglich, daß der erste Lenkkreis für den normalen Fahrbetrieb vorgesehen und entsprechend von seinem Kraftniveau her dimensioniert ist, wobei der zweite Lenkkreis nur unterstützend zum ersten Lenkkreis, zum Beispiel während des Parkier- bzw. Rangierbetriebs zugeschaltet wird. Sollte der erste Lenkkreis ausfallen, bildet der zweite Lenkkreis eine Rückfallebene, wodurch das Fahrzeug weiterhin sicher lenkbar ist.

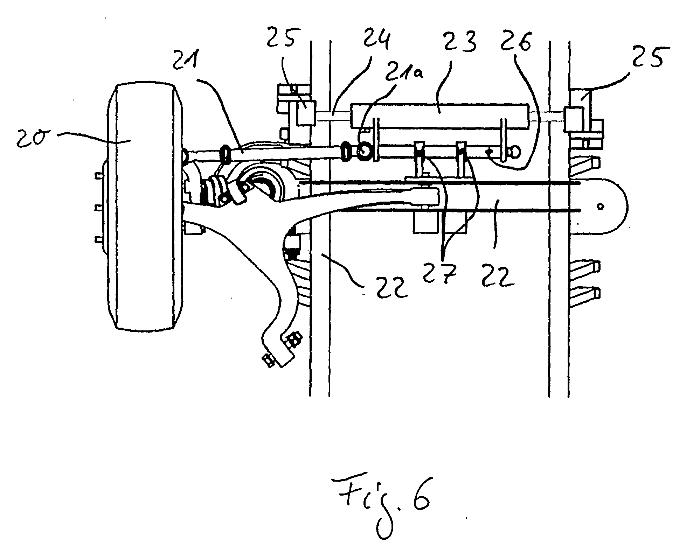

Die Fig. 4 zeigt eine perspektivische Darstellung einer erfindungsgemäßen Lenkung mit zwei parallel angeordneten Führungsstangen 5, auf denen zwei über Zwischenteile 4c miteinander starr verbundene Zylinder angeordnet sind, die zusammen einen Schlitten 4 bilden. Die Führungsstangen 5 sind zwischen zwei Ventilblöcken 6 angeordnet. Die Ventilblöcke 6 entsprechen den in der Fig. 3 schematisch dargestellten Ventilblöcke 6₁ und 6₂.

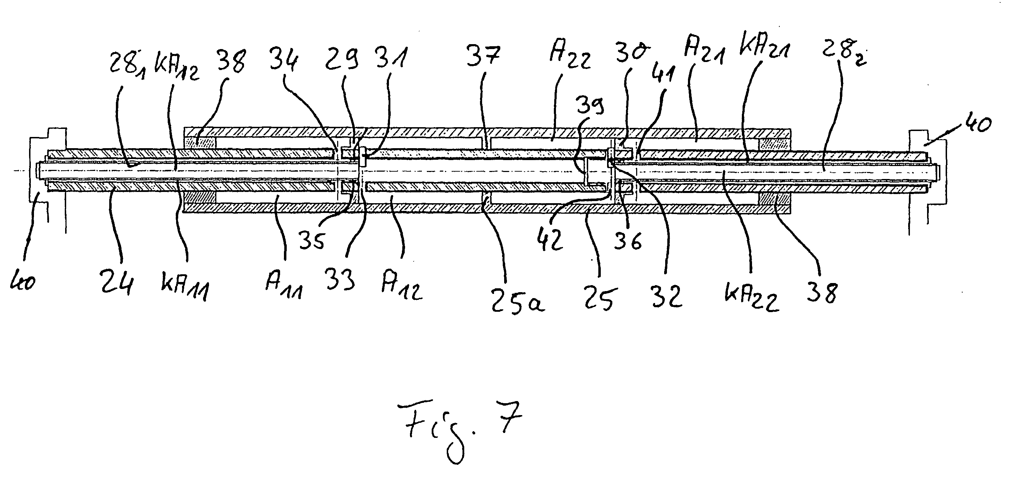

Mit der Fig. 5 wird noch einmal der konkrete Aufbau des Kolben-Zylinder-Systems beschrieben, wobei der prinzipielle Aufbau dem der Fig. 3 mit dem Unterschied entspricht, daß die Zylinder 4 direkt, das heißt ohne Zwischenelemente miteinander verbunden sind (4d). Die Führungsstangen 5 sind als Rohre ausgebildet, die mittels Befestigungselementen 15, 16 parallel zueinander gehalten sind. Die freien Enden 5"₁, 5"₂ sind mittels Verschlußschrauben 12, 14 und einliegenden Dichtungen 11, 13 verschlossen, so daß an diesen Enden kein fluides Medium heraustreten kann. Die Verschlußschrauben 12 bzw. 14 drükken die Führungsstangen 5₁ und 5₂ mit ihren freien Enden 5'₁, 5'₂ in den jeweiligen Zylinderblock. Hierdurch ergibt sich eine sichere und dauerhaft Verbindung zwischen den Führungsstangen mit ihren Kanälen und den Ventilblökken. Es ist jedoch in einer alternativen Ausführung ebenso möglich, die Enden 5'₁ und 5'₂ der Führungsstangen mit den Ventilblöcken zu verschrauben. Das fluide Medium wird über die entgegengesetzten freien Enden der Führungsstangen 5₁ und 5₂ in die durch die Führungsstangen 5₁ und 5₂ gebildeten Kanäle KA₁₁ und KA₂₁ in Richtung der Arbeitsräume A₁₁ und A₂₁ gefördert bzw. aus diesen herausgelassen. Die Kanäle KA₁₁ und KA₂₁ werden durch die Innenwandung der Führungsstange 5₁ bzw. 5₂ und dem innenliegenden Rohr 18₁ bzw. 18₂ gebildet. Die Kanäle KA₁₁ und KA₂₁ sind über fensterartige Öffnungen 8, 9 mit den zugehörigen Arbeitsräumen A₁₁ und A₂₁ in Verbindung. Die Kanäle KA₁₂ und KA₂₂ sind durch die innenliegenden Rohre 18₁ bzw. 18₂ gebildet. Die Kanäle KA₁₁ und KA₁₂ bzw. KA₂₁ und KA₂₂ sind jeweils durch eine Dichtung D, welche den Endbereich des innenliegenden Rohres 18₁ bzw. 18₂ umfaßt und an dessen Außenwand anliegt und gleichzeitig an der Innenwand der Führungsstange 5₁ bzw. 5₂ anliegt abgedichtet. Über fensterartige Öffnungen 7, 10 sind die Kanäle KA₁₂ und KA₂₂ mit den dazugehörigen Arbeitsräumen A₁₂ und A₂₂ verbunden. Das Verhältnis zwischen Innendurchmesser Rᵢ der Führungsstangen 5₁ bzw. 5₂ und dem Außendurchmesser R_{A} der innenliegenden Rohre 18₁ bzw. 18₂ ist so zu bemessen, daß die Strömungsquerschnitte in etwa gleich groß sind, bzw. für die jeweiligen Anforderungen angepaßt sind. Die Zylinder 4 liegen mit ihren Endbereichen 4e, 4f abdichtend außen an der Führungsstange 5₁ bzw. 5₂ an, so daß kein fluides Medium aus den Arbeitsräumen heraus in die Umwelt gelangen kann. Die Arbeitsräume A₁₁ und A₁₂ bzw. A₂₁ und A₂₂ des ersten und zweiten Lenkkreises sind jeweils durch ein ringförmiges Teil K, welches insbesondere außen kragenförmig an der Führungsstange 5₁ bzw. 5₂ angeformt sein kann, voneinander getrennt. Damit das innenliegende Rohr 18₁ bzw. 18₂ nicht zu weit in die Führungsstange 5₁ bzw. 5₂ hineingeschoben werden kann, sind Stop-Elemente S vorzusehen. Die Stop-Elemente S können insbesondere in eine fensterartige Öffnung bzw. Bohrung der Führungsstangen 5₁ bzw. 5₂ eingesteckt bzw. eingeschraubt werden.

Die Fig. 6 zeigt eine alternative Ausführungsform eines erfindungsgemäßen zweikreisigen Steer-By-Wire-Lenk-Systems, wobei lediglich ein gelenktes Rad 20 dargestellt ist, welches über eine Spurstange 21, welche über das Gelenk 21a an einer mittleren Führungsstange 26 angelenkt ist, ausgelenkt werden kann. Die mittlere Führungsstange 26 ist starr mit einem Schlitten 23 verbunden, welcher seinerseits auf einer Führungsstange 24 verschieblich gelagert ist. Die Führungsstange 24 ist zwischen zwei Ventilblöcken 25 gelagert, welche mit dem Chassis 22 des Fahrzeugs verbunden sind. Die mittlere Spurstange 26 ist parallel zur Führungsstange 24 verschieblich über Gleitlager 27 am Chassis 22 gelagert. Durch die längliche Ausgestaltung des Schlittens 23 ist die vom Durchmesser her kleinere Führungsstange 24 relativ biegesteif, so daß die Befestigungspunkte der Führungsstange 24 relativ weit außen und somit unmittelbar am Chassis 22 angeordnet werden können.

Die Fig. 7 zeigt das Kolbenzylindersystem gemäß der Ausführungsform der Fig. 6 im Querschnitt. Die Führungsstange 24 liegt mit ihren beiden Enden in zwei Ventilblöcken 40 ein, wobei über die Ventilblöcke 40 das fluide Medium in die Kanäle KA₁₁, KA₁₂ , KA₂₁ und KA₂₂ hineinströmen bzw. aus diesen herausströmen kann. Zwei innenliegende Rohre 28₁ und 28₂ greifen jeweils von einer Stirnseite des Rohres 24 in dieses hinein und liegen mit ihren im Rohr 24 eingreifenden Enden an Stopelementen 31, 32 an. Die freien Enden der innenliegenden Rohre 28₁ und 28₂ sind von ringförmigen Dichtungen 35, 36 umgriffen, welche abdichtend an der Außenwandung der innenliegenden Rohre 28₁, 28₂ und der Innenwandung des Rohres 24 anliegen. Diese Dichtungen trennen die Kanäle jeweils eines Lenkkreises voneinander. Die Kanäle KA₁₂ und KA₂₂ sind durch eine im Rohr 24 einliegende Dichtung 39 voneinander abdichtend getrennt. Die Führungsstange bzw. das Rohr 24 weist fensterartige Öffnungen 33, 34, 41 und 42 auf, durch die die Kanäle KA₁₁, KA₁₂, KA₂₁ und KA₂₂ mit den Arbeitsräumen A₁₁, A₁₂, A₂₁ und A₂₂ verbunden sind. Der verschieblich gelagerte Zylinder bzw. Schlitten 25 umgreift die Führungsstange bzw. das Rohr 24 und bildet mit diesem zusammen die Arbeitsräume. Die Stirnseiten des Zylinders 25 sind mittels Dichtungen 38 verschlossen, so daß kein fluides Medium aus den Arbeitsräumen A₁₁ und A₂₁ an die Umwelt gelangen kann. Die Arbeitsräume A₁₂ und A₂₂ sind mittels eines am Zylinder 25 befindlichen Kragens 25a und zugehöriger Dichtung 37 voneinander getrennt. Die Arbeitsräume A₁₁ und A₁₂ sind durch ein ringförmiges oder bzw. kragenförmiges Teil 29 und zugehöriger Dichtung voneinander getrennt. Das Teil 29 kann zur Montage von der Stirnseite her auf das Rohr 24 aufgeschoben und dann unverlierbar mit dem Rohr 24 verbunden werden. Es ist jedoch auch möglich, dieses kragenförmige Teil an dem Rohr 24 anzuformen. Ebenso sind die Arbeitsräume A₂₁ und A₂₂ mittels eines Trennelements 30 und zugehöriger Dichtung voneinander getrennt. Die Trennelemente 29, 30 sind unbeweglich an dem Rohr 24 befestigt, wohingegen die Trennwand 25a mit dem Zylinder 25 verschoben wird.

Es ist selbstverständlich möglich, daß die die Zylinder bildenden Teile nicht einstückig, zum Beispiel aus einem Rohr bzw. Zylinder gefertigt, sondern zweiteilig oder mehrteilig gestaltet sind. So ist es zum Beispiel möglich, den Zylinder mittels zweier Halbschalen zu bilden, wobei dann Dichtungen zwischen den beiden Teilen vorzusehen sind.

Der Anschluß der durch die Führungsstangen und innenliegenden Rohre gebildeten Kanäle an den Fluidkreislauf der jeweiligen Lenkkreise ist prinzipiell beliebig gestaltbar. Es ist selbstverständlich möglich, von den konkret beschriebenen Ausführungsformen abzuweichen und dennoch vom Erfindungsgedanken Gebrauch zu machen. So kann eine Führungsstange auch zwei- oder mehrteilig ausgebildet sein, wenn dies für eine einfachere Montage notwendig ist. Die einzelnen, eine Führungsstange bildenden Teile können dann zum Beispiel ineinander gesteckt oder miteinander verschraubt oder sonstwie befestigt oder verbunden werden. Gleiches gilt für die die Zylinder bildenden Teile und den Schlitten als ganzes.

## Patentansprüche

1. Steer-By-Wire-Lenkung, mit einem auf die lenkbaren Räder (1, 20) wirkenden hydraulisch arbeitenden Stellaggregat, wobei das Stellaggregat mindestens einen Schlitten (4, 23) hat, der auf mindestens einer den jeweiligen Schlitten (4, 23) insbesondere durchgreifenden Führungsstange (5, 24) verschiebbar gelagert ist, wobei der jeweilige Schlitten (4, 23) zusammen mit der mindestens einen zugehörigen Führungsstange (5, 24) Arbeitsräume (A₁₁, A₁₂, A₂₁, A₂₂) eines Kolben-Zylinder-Systems bildet, wobei die mindestens eine Führungsstange (5, 24) jeweils mindestens einen Kanal (KA₁₁, KA₁₂, KA₂₁, KA₂₂) aufweist, der jeweils im Bereich eines Arbeitsraumes (A₁₁, A₁₂, A₂₁, A₂₂) endet, und dass der mindestens eine Schlitten (4, 23) direkt oder über Spurstangen (2, 21) die lenkbaren Räder (1, 20) verstellt, **dadurch gekennzeichnet, dass** die Führungsstange (5, 24) ein Rohr ist, wobei ein erster Kanal (KA₁₁, KA₂₁) durch das Rohr selbst gebildet ist und dass in dem Kanal ein innenliegendes Rohr (18₁, 18₂; 28₁, 28₂) angeordnet ist, dessen äußerer Durchmesser kleiner als der Innendurchmesser des Kanals (KA₁₁, KA₂₁) ist, und dass das innenliegende Rohr (18₁, 18₂; 28₁, 28₂) einen zweiten Kanal (KA₂₁, KA₂₂) bildet.

2. Steer-By-Wire-Lenkung nach Anspruch 1, **dadurch gekennzeichnet, dass** mehrere Schlitten (4a, 4b) direkt oder über mindestens ein Zwischenteil (4c) miteinander starr verbunden sind und einen Schlitten bilden.

3. Steer-By-Wire-Lenkung nach Anspruch 1 oder 2, **dadurch gekennzeichnet, dass** eine Führungsstange (5, 24) mehrere Kanäle aufweist, die sich von einer oder beiden Stirnseiten oder -bereichen der Führungsstange (5, 24) aus in diese hinein erstrekken.

4. Steer-By-Wire-Lenkung nach einem der vorherigen Ansprüche, **dadurch gekennzeichnet, dass** die mindestens eine Führungsstange (5, 24) an der Karosserie direkt oder über Zwischenteile an der Karosserie (22) befestigt bzw. gelagert ist.

5. Steer-By-Wire-Lenkung nach Anspruch 1, **dadurch gekennzeichnet, dass** die mindestens eine Führungsstange (5, 24) zwischen zwei Ventilblöcken (6; 6₁, 6₂) angeordnet ist, und dass die Kanäle bzw. Zuführleitungen der Führungsstange mit den Ventilen mindestens eines Ventilblocks (6₁, 6₂) in Wirkverbindung stehen.

6. Steer-By-Wire-Lenkung nach einem der vorherigen Ansprüche, **dadurch gekennzeichnet, dass** eine Führungsstange (5₁, 5₂), die zusammen mit einem Schlitten (4; 4a, 4b) Arbeitsräume (A₁₁, A₁₂, A₂₁, A₂₂) bildet, mindestens einen nach außen weisenden Kragen (K) aufweist, der insbesondere angeformt ist, wobei ein Kragen (K) jeweils zwei Arbeitsräume (A₁₁, A₁₂; A₂₁, A₂₂) voneinander trennt.

7. Steer-By-Wire-Lenkung nach einem der vorherigen Ansprüche, **dadurch gekennzeichnet, dass** zwei Führungsstangen (5₁, 5₂) parallel zueinander zwischen zwei Ventilblöcken (6₁, 6₂) angeordnet sind und einen Schlitten (4a, 4b) durchgreifen, und dass die jeweiligen Kanäle (KA₁₁, KA₁₂, KA₂₁, KA₂₂) der beiden Führungsstangen (51, 52) jeweils nur mit einem Ventilblock (6₁, 6₂) in Wirkverbindung stehen, wobei der Schlitten (4; 4a, 4b) mit jeder Führungsstange (51, 52) Arbeitsräume (A₁₁, A₁₂, A₂₁, A₂₂) eines Kolben-Zylinder-Systems bildet, und dass jede Führungsstange (5₁, 5₂) zusammen mit den von ihr gebildeten Arbeitsräumen (A₁₁, A₁₂, A₂₁, A₂₂) und dem zugeordneten Ventilblock (6₁, 6₂) einen separaten Lenkkreis bildet.

8. Steer-By-Wire-Lenkung nach Anspruch 7, **dadurch gekennzeichnet, dass** jeweils eine Führungsstange (5₁, 5₂) von einem Zylinder (4a, 4b) umgriffen ist, dessen Stirnseiten (4e, 4f) jeweils abdichtend an der zugehörigen Führungsstange (5₁, 5₂) anliegen, wobei die beiden Zylinder (4a, 4b) direkt oder über mindestens ein Verbindungsteil (4c) miteinander verbunden sind und den Schlitten (4) bilden.

9. Steer-By-Wire-Lenkung nach Anspruch 7 oder 8, **dadurch gekennzeichnet, dass** die Kraftangriffspunkte bzw. die Lagerungsstellen der Spurstangen (2) zwischen den beiden Führungsstangen (5₁, 5₂), insbesondere mittig zu diesen, angeordnet sind.

10. Steer-By-Wire-Lenkung nach Anspruch 7 oder 19, **dadurch gekennzeichnet, dass** die Kraftangriffspunkte bzw. die Lagerungsstellen der Spurstangen (2) neben den beiden Führungsstangen (5₁, 5₂) angeordnet sind.

11. Steer-By-Wire-Lenkung nach einem der Ansprüche 7 bis 10, **dadurch gekennzeichnet, dass** die Führungsstange ein Rohr mit Innendurchmesser (Rᵢ) ist, welches einen ersten Kanal (KA₁₁, KA₂₁) bildet und in dessen Innerem ein innenliegendes (18₁, 18₂) Rohr mit einem Außendurchmesser (Rₐ) angeordnet ist, welches einen zweiten Kanal (KA₁₂, KA₂₂) bildet, wobei beide Kanäle mit dem selben Ventilblock wirkverbunden sind, und dass eine Dichtung (D) den Zylindermantel des innenliegenden Rohres (18₁, 18₂) im Bereich dessen freien Endes abdichtend umgreift und abdichtend an der Innenwandung der Kanalwand (KA₁₁, KA₂₁) der Führungsstange (5₁, 5₂) anliegt.

12. Steer-By-Wire-Lenkung nach Anspruch 11, **dadurch gekennzeichnet, dass** die Dichtung (D) den ersten und zweiten Kanal (KA₁₂, KA₁₂; KA₂₁, KA₂₂) voneinander trennt und den Innenraum der Führungsstange (5₁, 5₂) in zwei Bereiche unterteilt.

13. Steer-By-Wire-Lenkung nach Anspruch 12, **dadurch gekennzeichnet, dass** in der Wandung der Führungsstange (5₁, 5₂) jeweils mindestens eine fensterartige Öffnung (7, 8, 9, 10) ist, die jeweils einen Bereich mit einem Arbeitsraum (A₁₁, A₁₂, A₂₁, A₂₂) verbindet.

14. Steer-By-Wire-Lenkung nach Anspruch 12 oder 13, **dadurch gekennzeichnet, dass** die Führungsstange (5₁, 5₂) im Bereich der Dichtung (D) einen umlaufenden kragenförmigen Vorsprung (K) aufweist, der die Arbeitsräume (A₁₁, A₁₂; A₂₁, A₂₂) voneinander trennt.

15. Steer-By-Wire-Lenkung nach einem der vorherigen Ansprüche 1 bis 6, **dadurch gekennzeichnet, dass** eine durch ein Außenrohr (24) gebildete Führungsstange den Schlitten (23, 25) durchgreift, wobei in dem Außenrohr (24) zwei Innenrohre (28₁, 28₂) einliegen, die sich jeweils von einer Stirnseite her in das Außenrohr (24) hineinerstrecken, wobei eine Dichtung (39) den Innenraum des Außenrohrs (24) in zwei voneinander getrennte Teilräume unterteilt, und jeweils eine zwischen einem Innenrohr (28₁, 28₂) und dem Außenrohr (24) einliegende Ring-Dichtung (35, 36) die vom Außenrohr (24) und Innenrohr (28₁, 28₂) gebildeten beiden Kanäle (KA₁₁, KA₁₂; KA₂₁, KA₂₂) voneinander abdichtet, wobei daß Außenrohr (24) fensterartige Öffnungen (33, 34) aufweist, die die Kanäle (KA₁₁, KA₁₂, KA₂₁, KA₂₂) mit den durch das Außenrohr (24) und dem Schlitten (23, 25) gebildeten Arbeitsräumen (A₁₁, A₁₂, A₂₁, A₂₂) verbindet.

16. Steer-By-Wire-Lenkung nach Anspruch 15, **dadurch gekennzeichnet, dass** der Schlitten (23) ein rohrförmiges Teil (25) aufweist, welches von dem Außenrohr (24) durchgriffen ist und Dichtungen (38) zwischen dem Teil (25) und dem Außenrohr (24), die Arbeitsräume (A₁₁, A₂₁) nach außen hin abdichten.

17. Steer-By-Wire-Lenkung nach Anspruch 15 oder 16, **dadurch gekennzeichnet, dass** jeweils ein am Außenrohr (25) befindlicher nach außen gerichteter Kragen (29, 30) die Arbeitsräume (A₁₁, A₁₂; A₂₁, A₂₂) eines Lenkkreises voneinander trennt.

18. Steer-By-Wire-Lenkung nach Anspruch 17, **dadurch gekennzeichnet, dass** der Kragen (29, 30) am Außenrohr (24) angeformt ist oder durch ein zusätzliches mit dem Außenrohr (24) verbundenes ringförmiges Teil gebildet ist.

19. Steer-By-Wire-Lenkung nach einem der Ansprüche 15 bis 18, **dadurch gekennzeichnet, dass** ein am rohrförmigen Teil (25) befindlicher nach innen gerichteter Kragen (25a) und eine Ringdichtung (37) die zwei benachbarten Arbeitsräume (A₁₂, A₂₂) zweier Lenkkreise voneinander trennt.

20. Steer-By-Wire-Lenkung nach einem der vorhergehenden Ansprüche, **dadurch gekennzeichnet, dass** die Spurstangen (2, 21) jeweils mit einem ihrer Enden am Schlitten (4, 23) drehbar angelagert sind.

21. Steer-By-Wire-Lenkung nach einem der vorhergehenden Ansprüche, **dadurch gekennzeichnet, dass** parallel zum Schlitten (23) eine mittlere Spurstange (26) angeordnet und an diesem befestigt oder integriert ist, wobei die mittlere Spurstange (26) an der Karosserie (22) parallel zum Schlitten (23) verschiebbar gelagert ist, und dass die Spurstangen (21) jeweils mit einem ihrer Enden an der mittleren Spurstange (26) drehbar bzw. verschwenkbar angelagert sind.

22. Steer-By-Wire-Lenkung nach einem der vorhergehenden Ansprüche, **dadurch gekennzeichnet, dass** beide Lenkkreise parallel zur gleichen Zeit wirken und insbesondere die zugehörigen Steuerventil Ventile mit offener Mitte ("open center") oder mit "geschlossener Mitte" (Closed Center) sind.

23. Steer-By-Wire-Lenkung nach einem der vorhergehenden Ansprüche 1 bis 21, **dadurch gekennzeichnet, dass** der erste Lenkkreis von seinem Kraftniveau her derart dimensioniert ist, dass er mit Ausnahme für den Parkierbetrieb bzw. Rangierbetrieb des gelenkten Fahrzeugs hinreichend große Kräfte für der Fahrbetrieb aufbringt.

24. Steer-By-Wire-Lenkung nach einem der vorhergehenden Ansprüche 1 bis 21 oder 23, **dadurch gekennzeichnet, dass** der zweite Lenkkreis bei Ausfall des ersten Lenkkreises dessen Funktion übernimmt.

25. Steer-By-Wire-Lenkung nach Anspruch 24, **dadurch gekennzeichnet, dass** das Steuerventil des ersten Lenkkreises ein Ventil mit offener Mitte ("open center") und das Steuerventil des zweiten Lenkkreises ein Ventil mit geschlossener Mitte ("closed center") ist.

26. Steer-By-Wire-Lenkung nach einem der vorhergehenden Ansprüche 22 bis 25, **dadurch gekennzeichnet, dass** der zweite Lenkkreis von seinem Kraftniveau her gleich oder schwächer dimensioniert ist als der erste Lenkkreis.

27. Steer-By-Wire-Lenkung nach einem der vorherigen Ansprüche, **dadurch gekennzeichnet, dass** die Lenkung zusätzliche Führungen zur Lagerung des mindestens einen Schlittens aufweist.

28. Steer-By-Wire-Lenkung nach dem vorhergehenden Anspruch, **dadurch gekennzeichne**t, dass zumindest eine zusätzliche Führung eine Führungsstange ist, die den Schlitten durchgreift.

## Claims

1. Steer-by-wire steering system, comprising a hydraulic control unit that acts on the steerable wheels (1, 20), whereby the control unit has at least one cradle (4, 23), that is displaceably mounted on at least one guide rod (5, 24) in particular passing through the respective cradle (4, 23), whereby the respective cradle (4, 23) together with the at least one associated guide rod (5, 24) forms working chambers (A₁₁, A₁₂, A₂₁, A₂₂) of a piston-cylinder system, whereby the at least one guide rod (5, 24) in each case has at least one channel (KA₁₁, KA₁₂, KA₂₁, KA₂₂), which each terminates in the vicinity of a working chamber (A₁₁, A₁₂, A₂₁, A₂₂), and that the at least one cradle (4, 23) adjusts the steerable wheels (1, 20) directly or by means of steering tie rods (2, 21), **characterised in that** the guide rod (5, 24) is a tube, whereby a first channel (KA₁₁, KA₂₁) is formed by the tube itself and that in the channel is arranged an inner tube (18₁, 18₂; 28₁, 28₂), the outside diameter of which is smaller than the inside diameter of the channel (KA₁₁, KA₂₁) and that the inner tube (18₁, 18₂; 28₁, 28₂) forms a second channel (KA₂₁, KA₂₂).

2. Steer-by-wire steering system according to Claim 1, **characterised in that** several cradles (4a, 4b) are rigidly connected with one another directly or by means of at least one intermediate part (4c) and form one cradle.

3. Steer-by-wire steering system according to Claim 1 or 2, **characterised in that** a guide rod (5, 24) has several channels, which extend out from one or both ends or areas of the guide rod (5, 24) into these.

4. Steer-by-wire steering system according to any one of the previous claims, **characterised in that** the at least one guide rod (5, 24) is fastened or mounted on the bodywork (22) directly or by means of intermediate parts.

5. Steer-by-wire steering system according to Claim 1, **characterised in that** the at least one guide rod (5, 24) is placed between two valve blocks (6; 6₁, 6₂), and that the channels and/or feed lines of the guide rod actively communicate with the valves of at least one valve block (6₁, 6₂).

6. Steer-by-wire steering system according to any one of the previous claims, **characterised in that** a guide rod (5₁, 5₂), together with a cradle (4; 4a, 4b) forming working chambers (A₁₁, A₁₂, A₂₁, A₂₂), has at least one collar (K) pointing outwards, which in particular is moulded on, whereby one collar (K) separates two working chambers (A₁₁, A₁₂; A₂₁, A₂₂) in each case.

7. Steer-by-wire steering system according to any one of the previous claims, **characterised in that** two guide rods (5₁, 5₂) are placed between two valve blocks (6₁, 6₂) parallel to each other and pass through a cradle (4a, 4b), and that the respective channels (KA₁₁, KA₁₂, KA₂₁, KA₂₂) of the two guide rods (51, 52) in each case actively communicate with only one valve block (6₁, 6₂), whereby the cradle (4; 4a, 4b) with each guide rod (51, 52) forms working chambers (A₁₁, A₁₂, A₂₁, A₂₂) of a piston-cylinder system and that each guide rod (5₁, 5₂) together with the working chambers (A₁₁, A₁₂, A₂₁, A₂₂) formed by it and the associated valve block (6₁, 6₂) forms a separate steering circuit.

8. Steer-by-wire steering system according to Claim 7, **characterised in that** a guide rod (5₁, 5₂) is encompassed by a cylinder (4a, 4b) in each case, the ends (4e, 4f) of which lie sealingly against the associated guide rods (5₁, 5₂,) in each case, whereby the two cylinders (4a, 4b) are connected with one another directly or by means of at least one connection part (4c) and form the cradle (4).

9. Steer-by-wire steering system according to Claim 7 or 8, **characterised in that** the points of application of force and/or the mounting places of the steering tie rods (2) are arranged between the two guide rods (5₁, 5₂) in particular centrally to these.

10. Steer-by-wire steering system according to Claim 7 or 19, **characterised in that** the points of application of force and/or the mounting places of the steering tie rods (2) are arranged beside the two guide rods (5₁, 5₂).

11. Steer-by-wire steering system according to any one of Claims 7 to 10, **characterised in that** the guide rod is a tube with inside diameter (Rᵢ), which forms a first channel (KA₁₁, KA₂₁) and in the inside of which is arranged an inner tube (18₁, 18₂) with an outside diameter (Rₐ), which forms a second channel (KA₁₂, KA₂₂), whereby both channels are actively connected with the same valve block, and that a gasket (D) encompasses and seals the cylinder sleeve of the inner tube (18₁, 18₂) in the vicinity of its free end and lies sealingly against the inner wall of the channel wall (KA₁₁, KA₂₁) of the guide rod (5₁, 5₂).

12. Steer-by-wire steering system according to Claim 11, **characterised in that** the gasket (D) separates the first and second channel (KA₁₁, KA₁₂; KA₂₁, KA₂₂) from one another and divides the interior of the guide rod (5₁, 5₂) into two areas.

13. Steer-by-wire steering system according to Claim 12, **characterised in that** there is in each wall of the guide rod (5₁, 5₂) at least one window-like orifice (7, 8, 9, 10), which connects one area with a working chamber (A₁₁, A₁₂, A₂₁, A₂₂) in each case.

14. Steer-by-wire steering system according to Claim 12 or 13, **characterised in that** the guide rod (5₁, 5₂) in the vicinity of the gasket (D) has a circulating collar-shaped projection (K), which separates the working chambers (A₁₁, A₁₂; A₂₁, A₂₂) from one another.

15. Steer-by-wire steering system according to any one of the previous Claims 1 to 6, **characterised in that** a guide rod formed by an outer tube (24) passes through the cradle (23, 25), whereby two inner tubes (28₁, 28₂), which each extend from one end into the outer tube (24), lie in the outer tube (24), whereby a gasket (39) divides the interior of the outer tube (24) into two sub-spaces separated from one another and in each case a circular gasket (35, 36) lying between an inner tube (28₁, 28₂) and the outer tube (24) seals the two channels (KA₁₁, KA₁₂; KA₂₁, KA₂₂) formed by the outer tube (24) and inner tube (28₁, 28₂) from one another, whereby the outer tube (24) has window-like orifices (33, 34), which connect the channels (KA₁₁, KA₁₂, KA₂₁, KA₂₂) with the working chambers (A₁₁, A₁₂, A₂₁, A₂₂) formed by the outer tube (24) and the cradle (23, 25).

16. Steer-by-wire steering system according to Claim 15, **characterised in that** the cradle (23) has a tubular part (25), through which the outer tube (24) passes and gaskets (38) between the part (25) and the outer tube (24) seal the working chambers (A₁₁, A₂₁) in the outward direction.

17. Steer-by-wire steering system according to Claim 15 or 16, **characterised in that** in each case a collar (29, 30) present on the outer tube (25) pointing outwards separates the working chambers (A₁₁, A₁₂; A₂₁, A₂₂) of a steering circuit from one another.

18. Steer-by-wire steering system according to Claim 17, **characterised in that** the collar (29, 30) is moulded on the outer tube (24) or is formed by an additional circular part connected with the outer tube (24).

19. Steer-by-wire steering system according to any one of Claims 15 to 18, **characterised in that** a collar (25a) pointing inwards located on the tubular part (25), and a circular gasket (37) separate the two adjacent working chambers (A₁₂, A₂₂) of two steering circuits from one another.

20. Steer-by-wire steering system according to any one of the preceding claims, **characterised in that** the steering tie rods (2, 21) are rotatably mounted in each case with one of their ends on the cradle (4, 23).

21. Steer-by-wire steering system according to any one of the preceding claims, **characterised in that** a central steering tie rod (26) is arranged parallel to the cradle (23) and is fastened to or integrated with this, whereby the central steering tie rod (26) is displaceably mounted on the bodywork (22) parallel to the cradle (23), and that the steering tie rods (21) are rotatably or pivotally mounted in each case with one of their ends on the central steering tie rod (26).

22. Steer-by-wire steering system according to any one of the preceding claims, **characterised in that** both steering circuits operate in parallel at the same time and in particular the associated control valve are valves having open centre or with closed centre.

23. Steer-by-wire steering system according to any one of the preceding Claims 1 to 21, **characterised in that** the first steering circuit is dimensioned as far at its level of force is concerned in such a way that, except for parking and/or shunting operation of the steered vehicle, it applies sufficiently large forces for normal driving operation.

24. Steer-by-wire steering system according to any one of the preceding Claims 1 to 21 or 23, **characterised in that** in the event of failure of the first steering circuit the second steering circuit takes over its function.

25. Steer-by-wire steering system according to Claim 24, **characterised in that** the control valve of the first steering circuit is a valve having open centre and the control valve of the second steering circuit is a valve having closed centre.

26. Steer-by-wire steering system according to any one of the preceding Claims 22 to 25, **characterised in that** the second steering circuit as far as its level of force is concerned is dimensioned the same or less robustly than the first steering circuit.

27. Steer-by-wire steering system according to any one of the previous claims, **characterised in that** the steering system has additional guides for mounting at least one cradle.

28. Steer-by-wire steering system according to the preceding claim, **characterised in that** at least one additional guide is a guide rod, which passes through the cradle.

## Revendications

1. Direction de commande à orientation par câble comportant un module de réglage qui agit sur les roues orientables (1,20) et travaille d'une manière hydraulique, dans laquelle le module de réglage comporte au moins un coulisseau (4,23), qui est monté de manière à être déplaçable sur une barre de guidage (5,24) qui traverse notamment le coulisseau respectif (4,23), le coulisseau respectif (4,23) forme, conjointement avec la au moins une barre de guidage associée (5,24), des chambres de travail (A₁₁,A₁₂,A₂₁,A₂₂) d'un système à piston et cylindre, la au moins une barre de guidage (5,24) comporte respectivement au moins un canal (KA₁₁, KA₁₂, KA₂₁, KA₂₂), qui se terme respectivement dans la zone d'une chambre de travail (A₁₁, A₁₂, A₂₁, A₂₂) et que le au moins un coulisseau (4,23) règle directement ou à l'aide de barres d'accouplement (2,21), les roues orientables (1,2), **caractérisée en ce que** la barre de guidage (5,24) est un tube, un premier canal (KA₁₁,KA₂₁) étant formé dans le tube lui-même, et que dans le canal est disposé un tube intérieur (18₁,18₂;28₁,28₂), dont le diamètre extérieur est inférieur au diamètre intérieur du canal (KA₁₁, KA₂₁) et que le tube intérieur (18₁,18₂;28₁, 28₂) forme un second canal (KA₂₁,KA₂₂).

2. Direction de commande à orientation par câble selon la revendication 1, **caractérisée en ce que** plusieurs coulisseaux (4a,4b) sont reliés entre eux rigidement directement ou par l'intermédiaire d'un élément intercalaire (4c) et forment un coulisseau.

3. Direction de commande à orientation par câble selon la revendication 1 ou 2, **caractérisée en ce qu'**une barre de guidage (5,24) comporte plusieurs canaux, qui s'étendent à partir de l'une ou les deux faces ou zones frontales de la barre de guidage (5,24), dans cette dernière.

4. Direction de commande à orientation par câble selon l'une des revendications précédentes, **caractérisée en ce que** la au moins une barre de guidage (5,24) est fixée ou montée sur la carrosserie directement ou par l'intermédiaire d'éléments intercalaires sur la carrosserie (22).

5. Direction de commande à orientation par câble selon la revendication 1, **caractérisée en ce que** la au moins une barre de guidage (5,24) est disposée entre deux blocs de soupapes (6;6₁,6₂) et que les canaux ou les canalisations d'amenée de la barre de guidage coopèrent activement avec les soupapes d'au moins un bloc de soupapes (6₁, 6₂).

6. Direction de commande à orientation par câble selon l'une des revendications précédentes, **caractérisée en ce qu'**une barre de guidage (5₁,5₂), qui forme conjointement avec un coulisseau (4;4a,4b), des chambres de travail (A₁₁, A₁₂,A₂₁,A₂₂), comporte au moins un collet (K) dirigé vers l'extérieur, qui notamment est formé par moulage, un collet (K) séparant l'une de l'autre respectivement deux chambres de travail (A₁₁,A₁₂;A₂₁,A₂₂).

7. Direction de commande à orientation par câble selon l'une des revendications précédentes, **caractérisée en ce que** deux barres de guidage (5₁,5₂) sont disposées parallèlement entre elles entre deux blocs de soupapes (6₁, 6₂) et traversent un coulisseau (4a,4b), et que les canaux respectifs (KA₁₁,KA₁₂,KA₂₁,KA₂₂) des deux barres de guidage (51,52) coopèrent activement respectivement avec uniquement un bloc de soupapes (6₁,6₂), le coulisseau (4;4a,4b) formant, avec chaque barre de guidage (51,52), les chambres de travail (A₁₁,A₁₂,A₂₁,A₂₂) d'un système à piston et cylindre et que chaque barre de guidage (5₁,5₂) forme, conjointement avec les chambres de travail (A₁₁,A₁₂,A₂₁,A₂₂), qu'elle définit, et le bloc de soupapes associé (6₁,6₂), un circuit de direction séparé.

8. Direction à orientation par câble selon la revendication 7, **caractérisée en ce que** respectivement une barre de guidage (5₁, 5₂) est entourée par un cylindre (4a, 4b), dont les faces frontales (4e,4f) s'appliquent respectivement de façon étanche contre la barre de guidage associée (5₁,5₂), les deux cylindres (4a,4b) étant reliés directement entre eux directement ou par l'intermédiaire d'au moins un élément de liaison (4c) et formant le coulisseau (4).

9. Direction à orientation par câble selon la revendication 7 ou 8, **caractérisée en ce que** les points d'application de force ou les points de support des barres d'accouplement (2) sont disposés entre les deux barres de guidage (5₁,5₂), notamment en une position médiane par rapport à ces barres.

10. Direction à orientation par câble selon la revendication 7 ou 9, **caractérisée en ce que** les points d'application de force ou les points de support des barres d'accouplement (2) sont disposés à côté des deux barres de guidage (5₁, 5₂).

11. Direction à orientation par câble selon l'une des revendications 7 à 10, **caractérisée en ce que** la barre de guidage est un tube possédant un diamètre intérieur (Rᵢ), qui forme un premier canal (KA₁₁,KA₂₁) et à l'intérieur duquel est disposé un tube intérieur (18₁,18₂) possédant un diamètre intérieur (Rₐ), qui forme un second canal (KA₁₂, KA₂₂), les deux canaux coopérant activement avec le même bloc de soupapes, et qu'une garniture d'étanchéité (D) entoure de façon étanche l'enveloppe cylindrique du tube intérieur (18₁,18₂) au niveau de son extrémité libre et s'applique d'une manière étanche contre la paroi intérieure de la paroi de canal (KA₁₁, KA₂₁) de la barre de guidage (5₁, 5₂).

12. Direction à orientation par câble selon la revendication 11, **caractérisée en ce que** la garniture d'étanchéité (D) sépare l'un de l'autre les premier et second canaux (KA₁₁, KA₁₂; KA₂₁,KA₂₂) et divise l'espace intérieur de la barre de guidage (5₁,5₂) en deux zones.

13. Direction à orientation par câble selon la revendication 12, **caractérisée en ce que** dans la paroi de la barre de guidage (5₁,5₂) est disposée respectivement au moins une ouverture en forme de fenêtre (7,8,9,10), qui relie respectivement une zone à une chambre de travail (A₁₁, A₁₂, A₂₁, A₂₂).

14. Direction à orientation par câble selon la revendication 12 ou 13, **caractérisée en ce que** la barre de guidage (5₁,5₂) possède, dans la zone de la garniture d'étanchéité (D), un appendice saillant périphérique en forme de collet (K), qui sépare l'une de l'autre les chambres de travail (A₁₁,A₁₂;A₂₁,A₂₂).

15. Direction à orientation par câble selon l'une des revendications précédentes 1 à 6, **caractérisée en ce qu'**une barre de guidage formée par un tube extérieur (24) traverse le coulisseau (23,25), et dans laquelle dans le tube extérieur (24) sont insérés deux tubes intérieurs (28₁, 28₂), qui s'étendent respectivement à partir d'une face frontale dans le tube extérieur (24), une garniture d'étanchéité (39) divise l'espace intérieur du tube extérieur (24) en deux chambres partielles séparées l'une de l'autre, et respectivement une bague annulaire d'étanchéité (35,36), qui est située entre le tube intérieur (28₁,28₂) et le tube extérieur (24), réalise une séparation étanche entre les deux canaux (KA₁₁,KA₁₂;KA₂₁,KA₂₂) formés par le tube extérieur (24) et le tube intérieur (28₁,28₂), et le tube extérieur (24) comporte des ouvertures en forme de fenêtres (33,34), qui relient les canaux (KA₁₁,KA₁₂;KA₂₁,KA₂₂) aux chambres de travail (A₁₁,A₁₂;A₂₁,A₂₂) formées par le tube extérieur (24) et le coulisseau (23,25).

16. Direction à orientation par câble selon la revendication 15, **caractérisée en ce que** le chariot (23) possède une partie de forme tubulaire (25), qui est entourée par le tube extérieur (24) et que les garnitures d'étanchéité (38) situées entre la partie (25) et le tube extérieur (24) ferment de façon étanche les chambres de travail (A₁₁,A₂₁) vis-à-vis de l'extérieur.

17. Direction à orientation par câble selon la revendication 15 ou 16, **caractérisée en ce qu'**un collet (29,30), dirigé vers l'extérieur, qui est situé sur le tube extérieur (25), sépare l'une de l'autre respectivement une chambre de travail (A₁₁,A₁₂;A₂₁,A₂₂) d'un circuit de direction.

18. Direction à orientation par câble selon la revendication 17, **caractérisée en ce que** le collet (29,30) est formé par moulage sur le tube extérieur (24) ou est formé par une partie supplémentaire de forme annulaire, reliée au tube extérieur (24).

19. Direction à orientation par câble selon l'une des revendications 15 à 18, **caractérisée en ce qu'**un collet (25a), qui est dirigé vers l'intérieur et est situé sur la partie de forme tubulaire (25), et une garniture d'étanchéité annulaire (37) séparent réciproquement les deux chambres de travail voisines (A₁₂,A₂₂) de deux circuits de direction.

20. Direction à orientation par câble selon l'une des revendications précédentes, **caractérisée en ce que** les barres d'accouplement (2,21) sont montées de façon à pouvoir tourner respectivement par une de leurs extrémités sur le coulisseau (4,23).

21. Direction à orientation par câble selon l'une des revendications précédentes, **caractérisée en ce qu'**une barre d'accouplement médiane (26) est disposée parallèlement au coulisseau (23) et est fixée sur ce dernier ou y est intégrée, la barre d'accouplement médiane (26) étant montée de manière à être translatable sur la carrosserie (22) parallèlement au coulisseau (23) et que les barres d'accouplement (24) sont montées de manière à pouvoir pivoter ou basculer respectivement par une de leurs extrémités sur la troisième barre d'attelage médiane (26).

22. Direction à orientation par câble selon l'une des revendications précédentes, **caractérisée en ce que** les deux circuits de direction agissent parallèlement simultanément et notamment la soupape associée de commande sont des soupapes à "centre ouvert " ("open center") ou "à centre fermé" ("closed center").

23. Direction à orientation par câble selon l'une des revendications 1 à 21, **caractérisée en ce que** le premier circuit de direction est dimensionné en ce qui concerne son niveau de force, de telle sorte qu'à l'exception de l'opération de parcage ou de l'opération de rangement du véhicule orienté par braquage, ce circuit de direction applique des forces suffisamment intenses pour l'opération de conduite.

24. Direction à orientation par câble selon l'une des revendications précédentes 1 à 23, **caractérisée en ce que** le second circuit de direction assume sa fonction lors de la défaillance du premier circuit de direction.

25. Direction à orientation par câble selon la revendication 24, **caractérisée en ce que** la soupape de commande du premier circuit de direction est une soupape à centre ouvert ("open center") et la soupape de commande du second circuit de direction est une soupape à centre fermé ("closed center").

26. Direction à orientation par câble selon l'une des revendications précédentes 22 à 25, **caractérisée en ce que** le second circuit de direction est dimensionné avec un niveau de force égal ou inférieur à celui du premier circuit de direction.

27. Direction à orientation par câble selon l'une des revendications précédentes, **caractérisée en ce que** la direction comporte des guides supplémentaires pour le support du au moins un coulisseau.

28. Direction à orientation par câble selon l'une des revendications précédentes, **caractérisée en ce qu'**au moins un guide supplémentaire est une barre de guidage, qui traverse le coulisseau.
